# EUROPEAN PATENT SPECIFICATION

(11) **EP 0 659 811 B1**
(45) Date of publication and mention of the grant of the patent: **27.01.1999**
(21) Application number: 94120306.9
(22) Date of filing: 21.12.1994
(51) Int. Cl.: C08J 9/10, C08L 83/04

(54) **Fixing rolls based on liquid silicone rubber sponge compositions and method of fixing roll fabrication**
Fixierrollen auf Basis von flüssigen Silikon-Schaumgummi-Zusammensetzungen und Verfahren zur Herstellung von Fixierrollen
Rouleaux de fixage à base d'une composition liquide de caoutchouc mousse de silicone et méthode pour la fabrication des rouleaux de fixage

(30) Priority: 22.12.1993 JP 346528/93
(43) Date of publication of application: 28.06.1995
(73) Proprietor: Dow Corning Toray Silicone Company, Limited, Tokyo 103 (JP)
(72) Inventor: Higuchi, Kazuo, Dow Corning Toray Silicone, Ichihara-shi, Chiba Pref. (JP); Hongo, Mitsuru, Dow Corning Toray Silicone, Ichihara-shi, Chiba Pref. (JP); Nakamura, Akito, Dow Corning Toray Silicone, Ichihara-shi, Chiba Pref. (JP)
(74) Representative: Spott, Gottfried, Dr.

(56) References cited:
- EP-A- 0 399 554
- EP-A- 0 497 565
- GB-A- 2 137 630
- DATABASE WPI Derwent Publications Ltd., London, GB; AN 91-335167 & JP-A-3 223 345 (SHIN-ETSU) 2 October 1991

## Description

The invention relates to a method for the fabrication of fixing rolls based on a liquid silicone rubber sponge composition, the fixing rolls being used in copiers, facsimile machines, printers, and so forth. The invention also relates to said fixing rolls.

The excellent heat resistance and permanent compression set of silicone rubbers has resulted in their extensive use as coverings for the fixing rolls used in copiers, facsimile machines, printers, and so forth. In response to demands for higher levels of fixing roll performance, fixing rolls have recently entered into use in which the surface of the silicone rubber covering layer is coated with a fluororesin film. This yields additional improvements in the ability of the surface of the roll to resist adhesion by the toner, which is the developer. The ability of the surface of the roll to resist toner adhesion is known as toner releasability. Low-hardness silicone rubbers having reduced inorganic filler loadings are already known for use as the silicone rubber underlayer in these fluororesin-coated rolls. However, silicone rubber sponge has received attention as a silicone rubber that has an even lower hardness and that maintains a stable hardness.

Fixing rolls that use silicone rubber sponge have typically been fabricated by the following process. A silicone rubber sponge composition is first extrusion molded to give a cylindrical silicone rubber sponge molding. The base component of the starting silicone rubber sponge composition is a high-viscosity diorganopolysiloxane known as a silicone gum. A metal roll core is then inserted into the silicone rubber sponge molding with bonding through the use of adhesive. The fluororesin is thereafter coated on the surface, and the assembly is baked. This process, however, suffers from several drawbacks. For example, it may not be possible to coat the fluororesin layer uniformly on the silicone rubber sponge surface, or bonding between the silicone rubber sponge molding and metal roll core may be unsatisfactory. This fabrication process is also complex and has a low productivity.

The present invention uses a liquid silicone rubber sponge composition for fixing roll service that is highly moldable and yields a silicone rubber sponge layer that bonds well to both the metal roll core and fluororesin film layer. An object of the invention is the introduction of a fixing roll fabrication method that uses the aforesaid liquid silicone rubber sponge composition. According to the present invention there is applied a liquid silicone rubber sponge composition for application to fixing rolls that consist of a silicone rubber sponge layer on a metal core and a fluororesin film layer laminated on the silicone rubber sponge layer. The liquid silicone rubber sponge composition comprises components (A) to (E) and has a viscosity at 25°C of 100 to 5,000 poise. As a result of these characteristics, the composition exhibits excellent moldability and yields a silicone rubber sponge layer that adheres well to the underlying metal roll core and overlying fluororesin film layer. The composition is therefore highly qualified for application to fixing rolls that consist of a silicone rubber sponge layer on a metal core and a fluororesin film layer laminated on the silicone rubber sponge layer. The fixing roll fabrication method according to the invention provides for the efficient fabrication of highly toner-releasing fixing rolls.

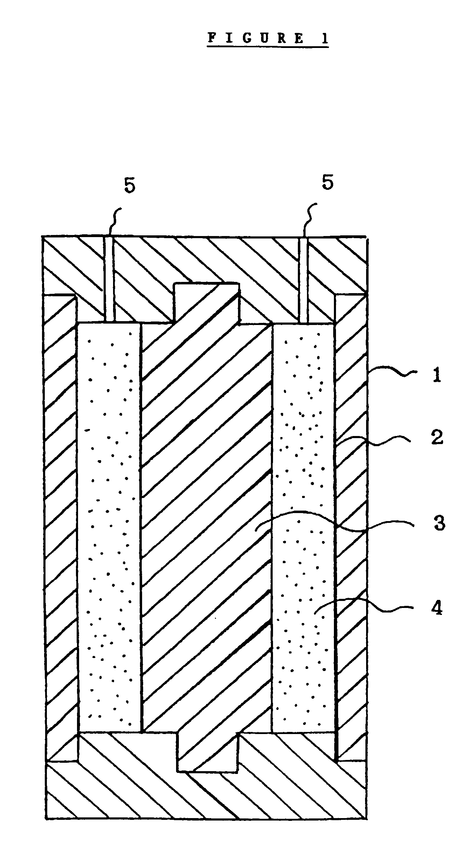

Figure 1 contains a longitudinal cross section of a fixing roll during fabrication by the method according to the invention.

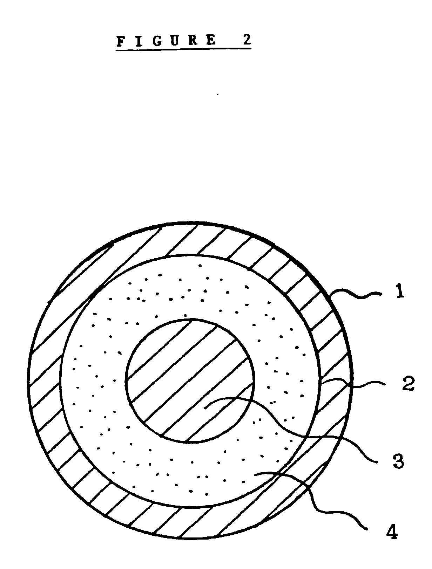

Figure 2 contains a transverse cross section of a fixing roll during fabrication by the method according to the invention.

Explanation of the Reference Numbers:
1 cylindrical wall
2 fluororesin layer
3 metal core
4 silicone rubber sponge layer
5 injection inlet for the heat-curing liquid silicone rubber sponge composition.

The heat-curing liquid silicone rubber sponge composition used according to the invention comprises a heat-curing liquid silicone rubber sponge composition for application to fixing rolls that consist of a silicone rubber sponge layer on a metal core and a fluororesin film layer laminated on said silicone rubber sponge layer, wherein said heat-curing liquid silicone rubber sponge composition comprises
(A) 100 weight parts diorganopolysiloxane that contains at least 2 silicon-bonded alkenyl groups in each molecule and that has a viscosity at 25°C of 500 to 50,000 centipoise,
(B) organohydrogenpolysiloxane that contains at least 3 silicon-bonded hydrogen atoms in each molecule, in a quantity sufficient to give values of 0.5:1 to 20:1 for the ratio of the number of moles of silicon-bonded hydrogen in the instant component to the number of moles of silicon-bonded alkenyl in component (A),
(C) 5 to 200 weight parts inorganic filler,
(D) platinum catalyst, in a quantity sufficient to provide 10 to 500 weight parts platinum metal for each 1,000,000 weight parts component (A),
   and
(E) 0.1 to 5 weight parts organic blowing agent compound,
and has a viscosity at 25°C of 100 to 5,000 poise.

To explain the preceding in greater detail, the diorganopolysiloxane (A) in the silicone rubber sponge composition used according to the invention must contain at least 2 silicon-bonded alkenyl groups in each molecule. This alkenyl group is exemplified by vinyl, allyl, and propenyl. The non-alkenyl silicon-bonded organic groups are exemplified by alkyl groups such as methyl, ethyl, and propyl; aryl groups such as phenyl and tolyl; and substituted alkyl groups such as 3,3,3-trifluoropropyl and 3-chloropropyl. This diorganopolysiloxane should have a straight-chain molecular structure, although straight-chain diorganopolysiloxane containing a small amount of branching may also be used. Subject diorganopolysiloxane must have a viscosity in the range of 500 to 50,000 centipoise at 25°C.

Component (B), which is a crosslinker, must contain at least 3 silicon-bonded hydrogen atoms in each molecule. Organic groups which may be present in addition to SiH are exemplified by alkyl groups such as methyl, ethyl, and propyl; aryl groups such as phenyl and tolyl; and substituted alkyl groups such as 3,3,3-trifluoropropyl and 3-chloropropyl. This component may have a straight-chain, cyclic, or network molecular structure. Its viscosity is not critical, but a viscosity in the range of 3 to 10,000 centipoise at 25°C is preferred. Component (B) should be added in a quantity sufficient to give values of 0.5:1 to 20:1 and preferably 1:1 to 3:1 for the ratio of the number of moles of silicon-bonded hydrogen in the instant component to the number of moles of silicon-bonded alkenyl in component (A).

The inorganic filler comprising component (C) encompasses those inorganic fillers already generally known for use in silicone rubbers, and this component is therefore not specifically restricted as to type and so forth. Subject inorganic filler is specifically exemplified by fumed silica, precipitated silica, fumed and precipitated silicas that have been treated with organosilane or organosiloxane, fused silica powder, quartz powder, diatomaceous earth, carbon black, and various powders, such as those of calcium carbonate, alumina, iron oxide, titanium oxide, zinc oxide, and magnesium oxide. This component is added at 5 to 200 weight parts.

The platinum catalyst comprising component (D) catalyzes the cure of the composition used according to the invention. Component (D) is exemplified by platinum micropowder, chloroplatinic acid, chloroplatinic acid/olefin complexes, alcohol solutions of chloroplatinic acid, and chloroplatinic acid/alkenylsiloxane complexes. Component (D) may also take the form of micropowder prepared from thermoplastic resin containing a platinum catalyst as described above. Component (D) is added at 10 to 500 weight parts as platinum metal and preferably at 20 to 500 weight parts as platinum metal for each 1,000,000 weight parts of component (A). An inadequate cure is obtained at additions below 10 weight parts due to an inhibition of cure by the blowing agent, while additions in excess of 500 weight parts are uneconomical.

The organic compound comprising the blowing agent (E) functions to convert composition used according to the invention into silicone rubber sponge by decomposing when heated with the evolution of inert gas. This organic blowing agent compound preferably has a thermal decomposition temperature of 80°C to 220°C, and thermal decomposition temperatures in the range of 80°C to 160°C are even more preferred. Subject organic blowing agent compounds are exemplified by azobisisobutyronitrile, azodicarbonamide, dinitrosopentamethylenetetramine, 4,4'-oxybis(benzenesulfonyl hydrazide), p-toluenesulfonyl hydrazide, and blowing agent compositions comprising combinations of the aforesaid organic compounds with decomposition promoters. Many of the preceding are available commercially. This component is added at 0.1 to 5 weight parts and preferably 0.5 to 2 weight parts per 100 weight parts liquid silicone rubber (A).

Insofar as the objects of the invention are. not impaired, the silicone rubber composition used according to the invention may contain small or very small quantities of an additive selected from acetylenic compounds, hydrazines, triazoles, phosphines, and mercaptans. These additives function to inhibit the curing reaction and thereby extend the use time of the silicone rubber composition.

The composition used according to the present invention is prepared by combining and mixing components (A) to (E) along with any optional components. The viscosity of this composition must be in the range of 100 to 5,000 poise at 25°C. At viscosities below 100 poise, the foam can break and there is a strong tendency for nonuniform cells to be produced. Viscosities higher than 5,000 poise make it difficult to inject the charge during molding, for example, into a mold, which lengthens the injection time and thus necessitates high injection pressures.

In addition to the components described hereinbefore, the various additives as known in the art, for example, pigments, heat stabilizers, flame retardants, internal release agents, and so forth, may be added insofar as the objects of the invention are not impaired. Organoperoxide may be added in order to further advance the cure, again insofar as the objects of the invention are not impaired.

An explanation will now be provided for the method of fixing roll fabrication using the composition used according to the invention.

The method according to the present invention for fixing roll fabrication (hereinafter abbreviated as the method of the invention) relates to the fabrication of fixing rolls that consist of a silicone rubber sponge layer on a metal core and a fluororesin film layer laminated on said silicone rubber sponge layer. The method of the invention characteristically comprises installation of a cylindrical tube of fluororesin film at and along the interior surface of the cylindrical wall of a cylindrical mold, installation of a metal roll core in the center of said cylindrical mold, subsequently filling the liquid silicone rubber sponge composition for fixing roll service according to the invention as described hereinbefore between the cylindrical film tube and the metal roll core, and thereafter foaming and curing by heating. This fabrication method will be explained below with reference to the drawings.

In the first step of the method of the invention, a cylindrical tube of fluororesin film **2** is inserted and installed at and along the interior cylindrical wall of a cylindrical mold **1**, and a metal roll core **3** is then inserted and installed in the center of the cylindrical mold **1**. The fluororesin making up the cylindrical fluororesin film tube is exemplified by polytetrafluoroethylene resins, perfluoroalkoxy resins, and fluorinated ethylenepropylene resins. This cylindrical film tube generally has a thickness of 30 to 70 micrometers. In order to improve bonding with the silicone rubber sponge, the inner surface of the cylindrical film tube **2** has preferably been roughened by treatment with alkali or etching. The heat-curing liquid silicone rubber sponge composition used according to the invention is then injected under pressure from the liquid silicone rubber sponge composition inlet **5** into the volume between the cylindrical film tube **2** and metal roll core **3**. The mold is thereafter heated at a specified temperature for a specified period of time in order to cure and foam the silicone rubber composition and thereby form the silicone rubber sponge layer **4**. The mold is subsequently cooled and the contents are removed to yield a fixing roll in which a silicone rubber sponge layer **4** is formed over the metal core **3** and a fluororesin layer **2** is formed over the silicone rubber sponge layer **4**. Curing and foaming are generally run in this operation in the temperature range of 120°C to 280°C.

The invention will be explained in greater detail below with reference to working examples, in which "part" denotes "weight part" and the viscosity is the value at 25°C.

The various properties of the heat-curing liquid silicone rubber sponge compositions were evaluated by the following methods.

### Roll moldability

The appearance of the molded fixing roll was inspected visually, and a rating of "excellent" was given when the fixing roll was a completely satisfactory product.

### Foam characteristics

After molding of the fixing roll had been completed, the silicone rubber sponge layer on the metal roll core was sectioned with a knife and the internal cell structure was inspected using a microscope.

### Bonding

After molding of the fixing roll had been completed, the silicone rubber sponge layer was manually pulled while keeping the metal roll core stationary, and the failure surface was then inspected. A score of "+" was assigned when failure occurred in the silicone rubber sponge layer (100% cohesive failure), while a score of "x" was assigned when delamination occurred at the silicone rubber sponge layer/metal roll core interface.

Example 1. The following were combined and mixed to homogeneity: 100 parts dimethylvinylsiloxy-endblocked dimethylpolysiloxane with a viscosity of 10,000 centipoise and a vinyl group content of 0.14 weight%, 15 parts fumed silica with a specific surface area of 200 m²/g, 30 parts crushed quartz powder with an average particle size of 5 microns, 3 parts hexamethyldisilazane (surface-treatment agent for the fumed silica), and 1 part water. This was followed by heating in a vacuum to give liquid silicone rubber base A.

The following were mixed to homogeneity into 145 parts liquid silicone rubber base A: 1.3 parts trimethylsiloxy-endblocked dimethylsiloxane-methylhydrogensiloxane copolymer with a silicon-bonded hydrogen content of 0.8 weight%, 0.5 part 1-ethynyl-1-cyclohexanol (cure inhibitor), 0.6 part chloroplatinic acid/1,3-divinyltetramethyldisiloxane complex as platinum catalyst (platinum content = 0.6 weight%), and, as organic blowing agent compound, 2 parts of an azodicarbonamide + dinitrosopentamethylenetetramine mixed blowing agent (decomposition temperature = 122°C, brand name: Vinyfor AK#2, from Eiwa Kasei Kogyo Kabushiki Kaisha). The product was a heat-curing liquid silicone rubber sponge composition with a viscosity of 2,000 poise.

A cylindrical fluororesin (perfluoroalkoxy resin) film tube **2** was installed at and along the inner surface of the cylindrical wall of a cylindrical mold whose cylindrical wall **1** dimensions were length L = 400 mm, diameter D = 40 mm, and thickness t = 5 mm. The inner surface of the mold was chromium-plated.

A steel roll core **3** (length of cylindrical section **1** = 300 mm, diameter d = 5 mm) was subsequently installed, followed by the injection under pressure (injection pressure = 20 kg/cm²) of the aforementioned liquid silicone rubber sponge composition through the liquid silicone rubber sponge composition inlet **5**. The cylindrical wall **1** was maintained at 200°C for 20 minutes in order to cure and foam the silicone rubber sponge composition. The mold was cooled and the fixing roll contained therein was removed. The properties of this fluororesin-coated silicone rubber sponge roll were evaluated, and the results are reported below in Table 1.

Example 2. The following were combined and mixed to homogeneity: 100 parts dimethylvinylsiloxy-endblocked dimethylpolysiloxane with a viscosity of 10,000 centipoise and a vinyl group content of 0.14 weight%, 35 parts fumed silica with a specific surface area of 200 m²/g, 30 parts crushed quartz powder with an average particle size of 5 microns, 3 parts hexamethyldisilazane (surface-treatment agent for the fumed silica), and 1 part water. This was followed by heating in a vacuum to give liquid silicone rubber base B.

The following were mixed to homogeneity into 165 parts liquid silicone rubber base B: 1.3 parts trimethylsiloxy-endblocked dimethylsiloxane-methylhydrogensiloxane copolymer with a silicon-bonded hydrogen content of 0.8 weight%, 0.5 part 1-ethynyl-1-cyclohexanol, 0.6 part chloroplatinic acid/1,3-divinyltetramethyldisiloxane complex (platinum content = 0.6 weight%), and, as organic blowing agent compound, 2 parts of an azodicarbonamide + dinitrosopentamethylenetetramine mixed blowing agent (decomposition temperature = 122°C, brand name: Vinyfor AK#2, from Eiwa Kasei Kogyo Kabushiki Kaisha). The product was a heat-curing liquid silicone rubber sponge composition with a viscosity of 6,000 poise. The properties of this composition were evaluated as in Example 1, and the results are reported in Table 1 below.

Example 3. The following were mixed to homogeneity into 14.5 parts of the liquid silicone rubber base A prepared in Example 1 to give a liquid silicone rubber base C: 90 parts dimethylvinylsiloxy-endblocked dimethylpolysiloxane with a viscosity of 10,000 centipoise and a vinyl group content of 0.14 weight% and 27 parts crushed quartz powder with an average particle size of 5 microns.

The following were mixed to homogeneity into 131.5 parts liquid silicone rubber base C: 1.3 parts trimethylsiloxy-endblocked dimethylsiloxanemethylhydrogensiloxane copolymer with a silicon-bonded hydrogen content of 0.8 weight%, 0.5 part 1-ethynyl-1-cyclohexanol, 0.6 part chloroplatinic acid/1,3-divinyltetramethyldisiloxane complex (platinum content = 0.6 weight%), and, as organic blowing agent compound, 2 parts of an azodicarbonamide + dinitrosopentamethylenetetramine mixed blowing agent (decomposition temperature = 122°C, brand name:
Vinyfor AK#2, from Eiwa Kasei Kogyo Kabushiki Kaisha). The product was a heat-curing liquid silicone rubber sponge composition with a viscosity of 100 poise. The properties of this composition were evaluated as in Example 1, and the results are reported in Table 1 below.

Comparative Example 1. A liquid silicone rubber sponge composition was prepared as in Example 1, but in this case using dimethylvinylsiloxy-endblocked dimethylsiloxane-methylvinylsiloxane copolymer gum with a viscosity of 10,000,000 centipoise and a vinyl group content of 0.1 weight% in place of the dimethylpolysiloxane with a viscosity of 10,000 centipoise that was used in Example 1.

Fixing roll fabrication was carried out as in Example 1 using this comparative composition, but the moldability of the composition was found to be poor under the Example 1 conditions because the mold could not be 100% filled by the composition. Molding was therefore carried out by raising the injection pressure to 150 kg/cm². The properties of the obtained fluororesin-coated silicone rubber sponge roll were evaluated as in Example 1, and the results are reported in Table 1 below.

Comparative Example 2. A liquid silicone rubber sponge composition was prepared as in Example 1, but in this case changing the platinum catalyst addition to 0.1 part.

The resulting composition was molded into a fixing roll as in Example 1. The properties of the resulting sponge roll were evaluated as in Example 1, and these results are reported in Table 1 below.

**TABLE 1**

| | Example 1 | Example 2 | Example 3 | Comp. Ex. 1 | Comp. Ex. 2 |
|---|---|---|---|---|---|
| Roll Moldability | excellent | excellent | excellent | poor | good |
| Foam Characteristics | uniform cell structure | uniform cell structure | uniform cell structure | non-uniform cell structure | non-uniform cell structure |
| Bonding to the Fluororesin Film | excellent bonding + | excellent bonding + | excellent bonding + | poor bonding x | poor bonding x |
| Bonding to the Metal Core | + | + | + | x | x |

## Claims

1. A method for the fabrication of fixing rolls that comprise a silicone rubber sponge layer on a metal core and a fluororesin film layer laminated on the silicone rubber sponge layer, the method comprising the installation of a cylindrical tube of fluororesin film at and along the interior surface of the cylindrical wall of a cylindrical mold, installation of a metal roll core in the center of the cylindrical mold, filling a heat-curing liquid silicone rubber sponge composition comprising
(A) 100 weight parts diorganopolysiloxane containing at least 2 silicon-bonded alkenyl groups in each molecule and having a viscosity at 25°C of 500 to 50,000 centipoise,
(B) organohydrogenpolysiloxane containing at least 3 silicon-bonded hydrogen atoms in each molecule, in a quantity sufficient to give values of 0.5:1 to 20:1 for the ratio of the number of moles of silicon-bonded hydrogen in the instant component to the number of moles of silicon-bonded alkenyl in component (A),
(C) 5 to 200 weight parts inorganic filler,
(D) platinum catalyst in a quantity sufficient to provide 10 to 500 weight parts platinum metal for each 1,000,000 weight parts component (A), and
(E) 0.1 to 5 weight parts organic blowing agent compound;
where the silicone rubber sponge composition has a viscosity at 25°C of 100 to 5,000 poise; between the tube of fluororesin film and the metal roll core, and thereafter foaming and curing the silicone rubber sponge composition by heating.

2. A fixing roll prepared by the method of Claim 1.

## Patentansprüche

1. Verfahren zur Herstellung von Fixierwalzen, die eine Siliconschaumstoffschicht auf einem Metallkem und eine auf die Siliconschaumstoffschicht auflaminierte Fluorharzfilmschicht umfassen, wobei das Verfahren den Einbau eines zylindrischen Rohrs eines Fluorharzfilms an und entlang der Innenfläche der zylindrischen Wand einer zylindrischen Form, den Einbau eines Metallwalzenkems in die Mitte der zylindrischen Form, das Einfüllen einer wärmehärtbaren flüssigen Siliconschaumstoffzusammensetzung, die die folgenden Bestandteile umfaßt:
(A) 100 Gew.-Teile Diorganopolysiloxan mit mindestens 2 siliciumgebundenen Alkenylgruppen in jedem Molekül mit einer Viskosität von 500-50.000 Centipoise bei 25°C,
(B) Organohydrogenpolysiloxan mit mindestens 3 siliciumgebundenen Wasserstoffatomen in jedem Molekül in einer ausreichenden Menge, um Werte von 0,5:1 bis 20:1 bezüglich des Verhältnisses der Zahl der Mole an siliciumgebundenem Wasserstoff in der vorliegenden Komponente zur Zahl der Mole an siliciumgebundenen Alkenylgruppen in der Komponente (A) zu liefern,
(C) 5-200 Gew.-Teile anorganischen Füllstoff,
(D) Platinkatalysator in einer ausreichenden Menge, um 10-500 Gew.-Teile Platinmetall pro 1.000.000 Gew.-Teile Komponente (A) bereitzustellen, und
(E) 0,1-5 Gew.-Teile organische Treibmittelverbindung,
wobei die Siliconschaumstoffzusammensetzung eine Viskosität von 100-5000 Poise bei 25°C aufweist,
zwischen das Rohr aus dem Fluorharzfilm und den Metallwalzenkem und ein anschließendes Aufschäumen und Härten der Siliconschaumstoffzusammensetzung durch Erwärmen umfaßt.

2. Fixierwalze, hergestellt nach einem Verfahren gemäß Anspruch 1.

## Revendications

1. Un procédé pour la fabrication de rouleaux de fixation comprenant une couche de mousse de caoutchouc de silicone sur une âme métallique et une couche de pellicule de résine fluorée stratifiée sur la couche de mousse de caoutchouc de silicone, le procédé comprenant la mise en place d'un tube cylindrique formé d'une pellicule de résine fluorée sur et suivant la surface intérieure de la paroi cylindrique d'un moule cylindrique, la mise en place d'une âme métallique de rouleau au centre du moule cylindrique, l'introduction d'une composition liquide thermodurcissable de mousse de caoutchouc de silicone comprenant
(A) 100 parties en poids de diorganopolysiloxane contenant au moins 2 groupes alcényles liés au silicium dans chaque molécule et ayant une viscosité à 25°C de 500 à 50 000 mPa.s (500 à 50 000 centipoises),
(B) un organohydrogénopolysiloxane contenant au moins 3 atomes d'hydrogène liés au silicium dans chaque molécule, en une quantité suffisante pour donner des valeurs de 0,5:1 à 20:1 au rapport du nombre de moles d'atomes d'hydrogène liés au silicium dans le présent composant au nombre de moles de groupes alcényles liés au silicium dans le composant (A),
(C) 5 à 200 parties en poids de charge minérale,
(D) un catalyseur au platine en une quantité suffisante pour fournir 10 à 500 parties en poids de platine métallique pour 1 000 000 de parties en poids de composant (A), et
(E) 0,1 à 5 parties en poids d'un agent gonflant organique ;
la composition de mousse de caoutchouc de silicone ayant une viscosité à 25°C de 10 à 500 Pa.s (100 à 5000 poises), entre le tube en pellicule de résine fluorée et l'âme métallique de rouleau, puis l'expansion et le durcissement de la composition de mousse de caoutchouc de silicone par chauffage.

2. Un rouleau de fixation fabriqué par le procédé de la revendication 1.
